# EUROPEAN PATENT APPLICATION

(11) **EP 4 506 376 A1**
(43) Date of publication of application: **12.02.2025**
(21) Application number: 22964087.5
(22) Date of filing: 04.11.2022
(51) Int. Cl.: C08F 214/18, C08F 214/22, C08F 210/06, C08F 220/06, H01M 4/62, H01M 10/0525

(54) **FLUOROPOLYMER, PREPARATION METHOD, INSULATING COATING, SECONDARY BATTERY, AND ELECTRICAL APPARATUS**

(71) Applicant: Contemporary Amperex Technology Co., Limited, Ningde, Fujian 352100 (CN)
(72) Inventor: FENG, Wei, Ningde, Fujian 352100 (CN); LIU, Huihui, Ningde, Fujian 352100 (CN); OUYANG, Chuying, Ningde, Fujian 352100 (CN); SUN, Chengdong, Ningde, Fujian 352100 (CN); ZHANG, Shuai, Ningde, Fujian 352100 (CN); ZUO, Huanhuan, Ningde, Fujian 352100 (CN); ZHANG, Wenshuai, Ningde, Fujian 352100 (CN); ZHOU, Yongbin, Ningde, Fujian 352100 (CN)
(74) Representative: Jacob, Reuben Ellis
(86) International application number: PCT/CN2022/130063
(87) International publication number: WO 2024/092783

(57) **Abstract**

A fluoropolymer, a preparation method, an insulating coating, a secondary battery, and an electrical apparatus. The fluoropolymer comprises a structural unit derived from a monomer represented by formula I, a structural unit derived from an olefin monomer, and a structural unit derived from a monomer represented by formula II. On the basis of the total mole number of the structural units in the fluoropolymer, the molar content of the structural units derived from the monomer represented by formula I is 60% -80%. R 1 , R 2 , R 3 are each independently selected from hydrogen, fluorine, chlorine, or C 1-3 alkyl containing at least one fluorine atom, and R 4, R 5 , R 6 are each independently selected from hydrogen or a substituted or unsubstituted C 1-5 alkyl.

## Description

### TECHNICAL FIELD

The present disclosure relates to the technical field of secondary batteries, and in particular, to a fluoropolymer, a preparation method, an insulation coating, a secondary battery, and a powered device.

### BACKGROUND

In the preparation process of a cell electrode plate, an insulation coating is applied on a surface of a current collector to prevent the contact between the positive electrode and the negative electrode to form a short circuit during the use of the cell, which may cause safety accidents and even fire disaster and explosion. The insulation coating is often prepared by coating the surface of the current collector with an insulation slurry formulated by a binder, an inorganic insulating material, and an auxiliary agent. However, the insulation slurry in the related art has a short process window, poor flowability, and is prone to deposit and block the pipeline, which seriously affect the production efficiency of the electrode plate. Therefore, there is a need to develop a binder to improve the processability of the slurry.

### SUMMARY

The present disclosure has been made in view of the above problems, and an object thereof is to provide a fluoropolymer and an insulation coating including the fluoropolymer, to optimize a process window for preparing the insulation coating and improve the production efficiency of the insulation coating.

A first aspect of the present disclosure provides a fluoropolymer including a structural unit derived from a monomer of Formula I, a structural unit derived from an olefin monomer, and a structural unit derived from a monomer of Formula II. A molar content of the structural unit derived from the monomer of Formula I is in a range of 60% to 80% based on a total mole of the structural units in the fluoropolymer. Formula I and Formula II are as follows: 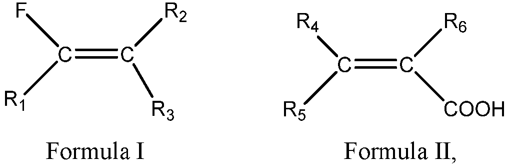 where R₁, R₂ and R₃ each are independently selected from hydrogen, fluorine, chlorine, or C₁₋₃ alkyl containing at least one fluorine atom, and R₄, R₅ and R₆ each are independently selected from hydrogen, or substituted or unsubstituted C₁₋₅ alkyl.

The fluoropolymer of the present disclosure can improve the filterability and flowability of the slurry, such that the slurry does not gel after standing for 6 hours, significantly widening the process window of the slurry and improving the processability of the slurry. In this way, the slurry can meet the production requirements of the insulation coating without adding a dispersant, which is beneficial to optimize the production process of the insulation coating and improve the production efficiency thereof.

In an embodiment, R₁ is fluorine, R₂ and R₃ each include at least one independently selected from a group consisting of hydrogen, fluorine, chlorine, and trifluoromethyl, and R₅ and R₆ each include at least one independently selected from a group consisting of hydrogen and methyl.

In an embodiment, a mole content of the structural unit derived from the monomer of Formula II is in a range of 5% to 25% based on the total mole of all the structural units in the fluoropolymer.

When the mole content of the structural unit derived from the monomer of Formula II is in the range of 5 to 25% based on the total mole of all the structural units in the fluoropolymer, the fluoropolymer enables the fluidity and the filterability of the insulation slurry to be further improved, the process window for processing the insulation slurry is further widened, and the fluoropolymer enables the insulation coating to have effective adhesion.

In an embodiment, a molar content of the structural unit derived from the olefin monomer is in a range of 5% to 30% based on the total mole of all the structural units in the fluoropolymer.

When the molar content derived from the olefin monomer is in the range of 5% to 30% based on the total mole of all the structural units in the fluoropolymer, the fluoropolymer enables the fluidity and the filterability of the insulation slurry to be further improved, the process window for processing the insulation slurry is further widened, and the fluoropolymer enables the insulation coating to have effective adhesion.

In an embodiment, the fluoropolymer has a weight-average molecular weight in a range of 500,000 to 800,000.

The fluoropolymer with the weight-average molecular weight in the range of 500,000 to 800,000 can further improve the fluidity and filterability of the insulation slurry, widen the process window for processing the insulation slurry, and help the insulation coating to maintain effective adhesion.

In an embodiment, a glue solution that is prepared by dissolving the fluoropolymer in N-methylpyrrolidone has a viscosity in a range of 1000 mPa·s to 3000 mPa·s, and a mass content of the fluoropolymer in the glue solution is 7% based on a total mass of the glue solution.

The viscosity of the glue solution containing 7%(mass content) of the fluoropolymer dissolved in N-methyl pyrrolidone is in the range of 1000 mPa·s to 3000 mPa·s, such that the insulation slurry using this fluoropolymer as a binder can effectively optimize the production process, improve the production efficiency, and improve the batch stability of the insulation coating without additional additives.

In an embodiment, the monomer of formula I is selected from at least one of a group consisting of vinylidene fluoride, tetrafluoroethylene, chlorotrifluoroethylene, and hexafluoropropylene.

In an embodiment, the olefin monomer is selected from at least one of a group consisting of propylene, 2-butene, and butadiene.

In an embodiment, the monomer of Formula II is selected from at least one of a group consisting of acrylic acid and methacrylic acid.

A second aspect of the present disclosure provides a preparation method of a fluoropolymer. The preparation method of the fluoropolymer includes subjecting at least one monomer of Formula I, at least one olefin monomer, and at least one monomer of Formula II to polymerization reaction under polymerizable conditions to prepare the fluoropolymer. A molar content of the monomer of Formula I is in a range of 60% to 80% based on a total mole of the monomer of Formula I, the olefin monomer, and the monomer of Formula II. Formula I and Formula II are as follows: 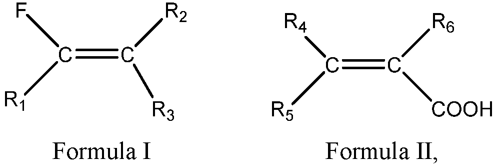 where R₁, R₂ and R₃ each are independently selected from hydrogen, fluorine, chlorine, or C₁₋₃ alkyl containing at least one fluorine atom, and R₄, R₅ and R₆ each are independently selected from hydrogen, or substituted or unsubstituted C₁₋₅ alkyl.

Compared with the traditional binders, the fluoropolymer prepared by this method can improve the filterability and flowability of the slurry, such that the slurry does not gel after standing for 6 hours, significantly widening the process window of the slurry and improving the processability of the slurry. In this way, the slurry can meet the production requirements of the insulation coating without adding a dispersant, which is beneficial to optimize the production process of the insulation coating and improve the production efficiency thereof.

In an embodiment, R₁ is fluorine, R₂ and R₃ each being independently selected from at least one of a group consisting of hydrogen, fluorine, chlorine, and trifluoromethyl, and R₅ and R₆ each being independently selected from at least one of a group consisting of hydrogen and methyl.

In an embodiment, the polymerization reaction includes first-stage polymerization and second-stage polymerization.

During the first-stage polymerization, providing a first initiator, an emulsifier, the at least one monomer of Formula I and a solvent for the first-stage polymerization, and continuously supplying the monomer of Formula I to maintain an initial reaction pressure.

During the second-stage polymerization, supplying the olefin monomer and the monomer of Formula II into a reaction vessel for the second-stage polymerization after a period of reaction, stopping the reaction when a pressure in the reaction vessel is reduced to be equal to or smaller than 0.5 MPa, performing solid-liquid separation, and retaining a solid phase.

The method of the present disclosure includes obtaining the fluoropolymer having high thermal stability by continuously supplying the monomer of Formula I to form a fluorine-containing chain segment; and then supplying the monomer of Formula II and the olefin monomer to reduce contact of the fluorine-containing chain segment with the external environment, to effectively alleviate the gelation phenomenon caused by the fluorine element. The fluoropolymer prepared by this method is more effective in improving the filterability and flowability of the insulation slurry than the fluoropolymer prepared by simultaneously performing polymerization while supplying all the monomers into the reaction vessel, further widening the process window of the slurry, and contributing to improving the production efficiency of the insulation coating.

In an embodiment, the first-stage polymerization has the initial reaction pressure in a range of 5.5 MPa to 7.5 MPa and a reaction temperature in a range of 70°C to 90°C.

In an embodiment, the second-stage polymerization includes: when a mass of the supplied monomer of Formula I is in a range of 70% to 85% of a total mass of the monomer of Formula I supplied during the polymerization reaction, supplying a mixed gas of the monomer of Formula I and the olefin monomer into the reaction vessel, and maintaining the initial reaction pressure to continuously perform the reaction; and after all the monomer of Formula I have been supplied into the reaction vessel, supplying a mixture of the olefin monomer and the monomer of Formula II into the reaction vessel.

Before supplying the monomer of Formula II into the reaction vessel, a mixed gas of the monomer of Formula I and the olefin monomer was supplied into the reaction vessel. The olefin monomer is used as a bridge, which helps to overcome the problems of large reaction difference and poor compatibility between the monomer of Formula I and the monomer of Formula II, and improves the polymerization degree of the fluoropolymer.

In an embodiment, a ratio of a total moles of the olefin monomer supplied during the polymerization reaction to the total mole of the monomer of Formula I is in a range of 1: 16 to 1: 2.

In an embodiment, a ratio of a total mole of the monomer of Formula II supplied during the polymerization reaction to the total mole of the monomer of Formula I is in a range of 1: 16 to 1: 3.

In an embodiment, a molar ratio of the olefin monomer to the monomer of Formula I in the mixed gas is in a range of 1: 1 to 2: 1.

In an embodiment, a molar ratio of the olefin monomer to the monomer of Formula II in the mixture is in a range of 3: 1 to 4: 1.

In an embodiment, the second-stage polymerization further includes: before supplying the mixed gas of the monomer of Formula I and the olefin monomer into the reaction vessel, adding the first initiator and a second initiator to the reaction vessel.

In an embodiment, the second-stage polymerization further includes: before supplying the mixture of the olefin monomer and the monomer of Formula II into the reaction vessel, adding a second initiator to the reaction vessel.

In an embodiment, the first initiator is persulfate, which is selected from at least one of a group consisting of potassium persulfate and ammonium persulfate.

In an embodiment, the second initiator is thiosulfate, which may be selected from sodium thiosulfate.

A third aspect of the present disclosure provides use of the fluoropolymer of the first aspect in a secondary battery. Alternatively, the secondary battery includes at least one of a lithium ion battery, a sodium ion battery, a magnesium ion battery, or a potassium ion battery.

A fourth aspect of the present disclosure provides an insulation coating including a binder and an inorganic insulating material, and the binder is the fluoropolymer of the first aspect.

The insulation coating is easy to process and has good uniformity, which help to improve productivity of the battery.

In an embodiment, a mass content of the binder is in a range of 7.0% to 13.0% based on a total mass of the insulation coating.

When the mass content of the binder is in the range of 7.0% to 13.0% of the total mass of the insulation coating, the binder can further improve the flowability and filterability of the insulation slurry, the process window for processing the insulation slurry is further widened, and the binder can ensure that the insulation coating maintains an effective bonding force.

In an embodiment, the inorganic insulating material includes a colored oxide. The colored oxide is selected from at least one of a group consisting of black zirconium dioxide, yellow zirconium dioxide, red zirconium dioxide, and green zirconium dioxide.

The applicant has unexpectedly discovered that the inclusion of a colored oxide in the insulation coating helps to improve the laser cutting quality and laser cutting speed of the electrode plate.

In an embodiment, a mass content of the colored oxide is in a range of 0.2% to 3% based on a total mass of the insulation coating.

When the mass content of the colored oxide in the insulation coating is in the range of 0.2% to 3%, it helps to improve the laser cutting performance with maximum efficiency.

A fifth aspect of the present disclosure provides a preparation method of an insulation coating. The preparation method of the insulation coating includes: preparing a glue solution by dispersing a binder in a solvent, the binder being the fluoropolymer of the first aspect of the present disclosure; preparing a slurry by mixing an inorganic insulating material with the glue solution and stirring the inorganic insulating material and the glue solution, a solid content of the slurry being in a range of 30% to 40%; and applying the slurry to a current collector to prepare the insulation coating.

The insulation coating prepared by the above method has high efficiency and uniform quality.

In an embodiment, the slurry has a viscosity in a range of 2500 mPa·s to 4000 mPa·s at the solid content in the range of 30% to 40%.

The slurry with the solid content in the range of 30% to 40% and the viscosity in the range of 2500 mPa·s to 4000 mPa·s can be directly used in the production of coatings without adding additional additives, which is beneficial to improve the production efficiency and reduce the production cost.

In an embodiment, the mixing the inorganic insulating material with the glue solution includes mixing a part of the inorganic insulating material excluding a colored oxide with the glue solution to obtain a mixture, stirring the mixture, adding the colored oxide to the stirred mixture, and stirring again to prepare the slurry.

The addition of the colored oxide at the final stage of the slurry preparation process is beneficial to improve the uniformity of colors of the prepared insulation coating, and to improve the subsequent laser cutting speed and laser cutting quality.

A sixth aspect of the present disclosure provides a secondary battery including a positive electrode plate, a separator, a negative electrode plate, and an electrolyte. The positive electrode plate and/or the negative electrode plate include an insulation coating according to the fourth aspect of the present disclosure. Alternatively, the secondary battery includes at least one of a lithium ion battery, a sodium ion battery, a magnesium ion battery, or a potassium ion battery.

A seventh aspect of the present disclosure provides a battery module including the secondary battery of the sixth aspect of the present disclosure.

An eighth aspect of the present disclosure provides a battery pack including the secondary battery of the sixth aspect of the present disclosure or the battery module of the seventh aspect of the present disclosure.

A ninth aspect of the present disclosure provides a powered device including at least one of the secondary battery of the sixth aspect of the present disclosure, the battery module of the seventh aspect of the present disclosure, or the battery pack of the eighth aspect of the present disclosure.

### BRIEF DESCRIPTION OF DRAWINGS

FIG. 1 is a schematic diagram of an electrode plate including an insulation coating.
FIG. 2 is a schematic diagram of a secondary battery according to an embodiment of the present disclosure.
FIG. 3 is an exploded view of the secondary battery according to the embodiment of the present disclosure as shown in FIG. 2.
FIG. 4 is a schematic diagram of a battery module according to an embodiment of the present disclosure.
FIG. 5 is a schematic diagram of a battery pack according to an embodiment of the present disclosure.
FIG. 6 is an exploded view of the battery pack according to the embodiment of the present disclosure as shown in FIG. 5.
FIG. 7 is a schematic diagram of a powered device in which a secondary battery is used as a power source according to an embodiment of the present disclosure.
FIG. 8 is a photomicrograph of an electrode plate of Embodiment 26 of the present disclosure after being laser cut, in which (A) is a planar photograph of a cut of the electrode plate, and (B) is a sectional photograph of the cut of the electrode plate.
FIG. 9 is a photomicrograph of an electrode plate of Embodiment 6 of the present disclosure after being laser cut, in which (A) is a plane photograph of a cut of the electrode plate, and (B) is a sectional photograph of the cut of the electrode plate.

### Description of Reference Numbers

1. battery pack; 2. upper box body; 3. lower box body; 4. battery module; 5. secondary battery; 51. casing; 52. electrode assembly; 53. cover plate; 6. electrode plate; 61. current collector; 62. active material layer; 63. insulation coating.

### DESCRIPTION OF EMBODIMENTS

Hereinafter, embodiments of the binder, the preparation method, the electrode, the battery and the powered device of the present disclosure are specifically disclosed with appropriate reference to the accompanying drawings. However, there may be cases where unnecessary detailed description is omitted. For example, detailed descriptions of well-known matters and repeated descriptions of practically identical structures are omitted. This is to avoid making the following description unnecessarily lengthy to facilitate understanding for those skilled in the art. In addition, the drawings and the following description are provided to enable those skilled in the art to fully understand the present application and are not intended to limit the subject matter recited in the claims.

The "ranges" disclosed herein are defined in terms of lower and upper limits, a given range is defined by selecting a lower limit and an upper limit, and the selected lower and upper limits defines boundaries of a particular range. Ranges defined in this manner may or may not include end values and may be arbitrarily combined, i.e., any lower limit may be combined with any upper limit to form a range. For example, if ranges of 60 to 120 and 80 to 110 are listed for a particular parameter, it is understood that ranges of 60 to 110 and 80 to 120 are also contemplated. In addition, if listed minimum range values are 1 and 2 and if listed maximum range values are 3, 4, and 5, the following ranges are all conceivable: 1 to 3, 1 to 4, 1 to 5, 2 to 3, 2 to 4, and 2 to 5. In the present application, unless otherwise indicated, the numerical range "a to b" represents an abbreviated representation of any real number combination between a and b, where a and b are both real numbers. For example, a numerical range of "0 to 5" indicates that all real numbers between "0 to 5" have been fully included herein, and "0 to 5" is merely a shorthand representation of combinations of these numbers. In addition, when it is stated that a certain parameter is an integer equal to or greater than 2, it is equivalent to disclosing that the parameter is, e.g., an integer of 2, 3, 4, 5, 6, 7, 8, 9, 10, 11, 12, etc.

All embodiments and alternative embodiments of the present application may be combined with each other to form a new technical solution if not specifically stated.

Unless otherwise specified, all the technical features and optional technical features of the present application may be combined with each other to form a new technical solution.

Unless otherwise specified, all steps of the present application may be performed sequentially or may be performed randomly, preferably sequentially. For example, the process includes steps (a) and (b), meaning that the process may include steps (a) and (b) performed sequentially, or may include steps (b) and (a) performed sequentially. For example, the process may further include step (c), meaning that step (c) may be added to the process in any order, e.g., the process may include steps (a), (b), and (c), include steps (a), (c), and (b), or include steps (c), (a), and (b) or the like.

If not specifically stated, "including" and "incorporating" described herein are intended to be open-ended as well as closed-ended. For example, "including" and "comprising" may mean that other components not listed may be included or incorporated, or that only listed components may be included or incorporated.

In the present application, the term "or" is inclusive if not specifically stated. For example, a phrase "A or B" means "A, B, or both A and B". More specifically, a condition of "A or B" is satisfied by any one of the following conditions: A is true (or present) and B is false (or not present); A is false (or absent) and B is true (or present); or both A and B are true (or present).

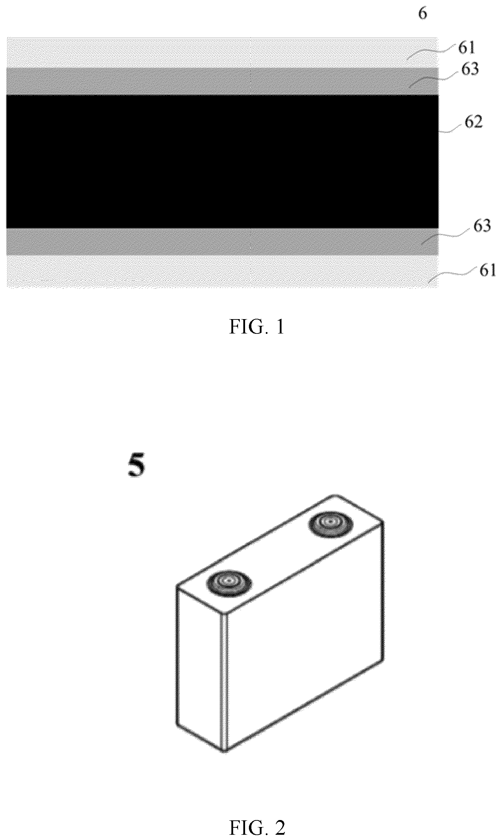

Safety is one of the most important research objects for secondary batteries. As shown in FIG. 1, an electrode plate 6 may be coated with an insulation coating 63 between a current collector 61 for forming a tab and an active material layer 62 during the preparation process, to prevent the direct contact of a positive electrode and a negative electrode to form a short circuit during the use of the cell, which may cause safety accidents and even fire and explosion. Since inorganic materials have a high electrical resistance, the inorganic materials are commonly dispersed in a binder to form a slurry to prepare an insulation coating. However, the viscosity of the traditional binder is too great, and slurry precipitation is easy to occur, which results in poor slurry uniformity and large variance of performance among batches of insulation coatings. In addition, the conventional binder makes the slurry to be poor in fluidity and is thus difficult to be uniformly coated. Therefore, a dispersant is required to be added in the slurry preparation process to improve the processability of the slurry. This undoubtedly increases the processing difficulty of the slurry, affects the production efficiency, and results in poor slurry stability among batches. In view of the above technical problems, the present disclosure has developed a binder for making the slurry to have better flowability and filterability, to improve the production efficiency and the production quality of the insulation coating.

Based on this, the present disclosure proposes a fluoropolymer, which includes a structural unit derived from a monomer of Formula I, a structural unit derived from an olefin monomer, and a structural unit derived from a monomer of Formula II. A molar content of the structural unit derived from the monomer of Formula I is in a range of 60% to 80% based on a total mole of the structural units of the fluoropolymer. Formula I and Formula II are shown below, 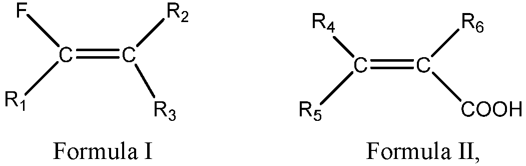 where R₁, R₂ and R₃ each are independently selected from hydrogen, fluorine, chlorine, or C₁₋₃ alkyl containing at least one fluorine atom, and R₄, R₅ and R₆ each are independently selected from hydrogen, or substituted or unsubstituted C₁₋₅ alkyl.

As used herein, the term "fluoropolymer" refers to a polymer containing elemental fluorine in the structural units.

As used herein, the term "polymer" includes, in one aspect, a chemically homogeneous collection of macromolecules prepared by polymerization, but the macromolecules have different degrees of polymerization, different molar masses, and different chain lengths. In another aspect, the term also includes derivatives of such collection of the macromolecules formed by polymerization, i.e., a product which may be obtained by a reaction, such as addition or substitution, of functional groups in the macromolecules as described above and which may be chemically homogeneous or chemically heterogeneous.

As used herein, the term "C₁₋₅ alkyl" refers to a straight-chain or branched-chain hydrocarbon group consisting merely of carbon atoms and hydrogen atoms, and no unsaturation is present in the hydrocarbon group. The hydrocarbon group has one to five carbon atoms, and is attached to the rest of the molecules through a single bond. The term "C₁₋₃ alkyl" is to be construed accordingly. Examples of C₁₋₃ alkyl include, but are not limited to, methyl, ethyl, n-propyl, 1-methylethyl (isopropyl), butyl, and pentyl. In some embodiments, the C₁₋₃ alkyl containing at least one fluorine atom is -CF₃, -CH₃CH₂F, or -CH₂FCH₂F.

As used herein, the term "substituted" means that at least one hydrogen atom of the compound or chemical moiety is replaced with substituent groups of another chemical moiety. The substituent groups each are independently selected from a group consisting of a hydroxyl group, a mercapto group, an amino group, a cyano group, a nitro group, an aldehyde group, a halogen atom, an alkenyl group, an alkynyl group, an aryl group, a heteroaryl group, a C₁₋₆ alkyl group, a C₁₋₆ alkoxy group, and combinations thereof.

As used herein, the term "olefin monomer" refers to a hydrocarbon containing at least one C=C bond (carbon-carbon double bond). Examples of the olefin monomer include, but are not limited to, ethylene, propylene, butylene, and butadiene. In some embodiments, R₁ is fluorine, R₂ and R₃ each include at least one independently selected from a group consisting of hydrogen, fluorine, chlorine, and trifluoromethyl, and R₅ and R₆ each include at least one independently selected from a group consisting of hydrogen and methyl.

In some embodiments, the fluoropolymer includes at least two structural units derived from monomers of different Formulas I, and one of the at least two structural units is derived from vinylidene fluoride. Different monomer types help to reduce the ordered arrangement of long chains of the fluoropolymer, reduce crystallinity, and improve flexibility.

In some embodiments, the monomer of Formula I includes at least one selected from a group consisting of vinylidene fluoride, tetrafluoroethylene, chlorotrifluoroethylene, and hexafluoropropylene.

In some embodiments, the olefin monomer includes at least one selected from a group consisting of propylene, 2-butene, and butadiene.

In some embodiments, the monomer of Formula II includes at least one selected from a group consisting of acrylic acid and methacrylic acid.

In some embodiments, the polymer includes at least one of the structural units derived from monomers of Formula I. In some embodiments, the polymer includes at least one of the structural units derived from monomers of Formula II. In some embodiments, the polymer includes, but is not limited to, vinylidene fluoride-ethylene-acrylic acid copolymer, vinylidene fluoride-butadiene-acrylic acid copolymer, vinylidene fluoride-propylene-acrylic acid copolymer, vinylidene fluoride-ethylene-methacrylic acid copolymer, vinylidene fluoride-hexafluoropropylene-ethylene-acrylic acid copolymer, vinylidene fluoride-hexafluoropropylene-ethylene-methacrylic acid copolymer, and vinylidene fluoride-trifluorochloroethylene-butadiene-methacrylic acid copolymer.

In some embodiments, the molar contents of the structural units derived from the monomers of Formula I may be selected to be 60%, 65%, 70%, 75%, or 80% based on the total mole of the structural units of the fluoropolymer.

The fluorine element in the structural unit derived from the monomer of Formula I can form a hydrogen bonding action with a hydroxyl group or/and a carboxyl group on the surface of the current collector, such that the insulation coating has a better adhesion and is not easy to fall off during manufacturing and use, which may result in safety accidents. The structural units derived from the olefin monomer and the monomer of Formula II can effectively reduce the fluorine content of the fluoropolymer such that the molar content of the structural unit derived from the monomer of Formula I is in a range of 60% to 80%, thereby improving the slurry gelation phenomenon caused by the fluorine element. In addition, the structural units derived from the olefin monomer and the monomer of Formula II can further increase the steric hindrance of the fluoropolymer, reduce aggregation of the fluorine-containing units, function to stabilize the slurry, alleviate settling of the slurry, and effectively improve filterability of the slurry.

Compared with the traditional binders, the fluoropolymer provided in the present disclosure can improve the filterability and flowability of the slurry, such that the slurry does not gel after standing for 6 hours, significantly widening the process window of the slurry and improving the processability of the slurry. In this way, the slurry can meet the production requirements of the insulation coating without adding a dispersant, which is beneficial to optimize the production process of the insulation coating and improve the production efficiency thereof.

As used herein, the term "process window" refers to a process range capable of ensuring the product quality, and the process range includes, but is not limited to, a temperature range, a pressure range, a storage duration, etc. It can be understood that the wider the process window is, the lower the requirements for the process accuracy are.

In some embodiments, the mole content of the structural unit derived from the monomer of Formula II is in a range of 5% to 25% based on the total mole of all the structural units of the fluoropolymer. In some embodiments, the molar content of the structural unit derived from the monomer of Formula II may be optionally one of 5%, 8%, 10%, 12%, 15%, 18%, 20%, 22%, and 25% based on the total mole of all the structural units of the fluoropolymer.

When the molar content of the structural unit derived from the monomer of Formula II is in a range of 5% to 25% based on the total mole of all the structural units of the fluoropolymer, on the one hand, a suitable content of polar carboxyl groups cannot cause the slurry to gel, such that the fluidity and filterability of the insulation slurry are further improved, and the process window for processing the insulation slurry is further widened; on the other hand, a suitable content of carboxyl groups enables the insulation coating to maintain effective adhesion.

In some embodiments, the molar content of the structural unit derived from the olefin monomer is in a range of 5% to 30% based on the total mole of all the structural units of the fluoropolymer. In some embodiments, the molar content of the structural unit derived from the olefin monomer is optionally one of 5%, 10%, 15%, 20%, 25%, and 30% based on the total mole of all the structural units of the fluoropolymer.

When the molar content of the structure unit derived from the olefin monomer is in a range of 5% to 30% based on the total mole of all the structural units of the fluoropolymer, the fluoropolymer can further improve the flowability and filterability of the insulation slurry, the process window for processing the insulation slurry is further widened, and the fluoropolymer enable the insulation coating to have effective adhesion.

In some embodiments, the weight-average molecular weight of the fluoropolymer is in a range of 500,000 to 800,000. In some embodiments, the weight-average molecular weight of the fluoropolymer is optionally one of 500,000, 60,000, 650,000, 700,000, 750,000, and 800,000.

As used herein, the term "weight-average molecular weight" refers to the sum of products of weight fractions of molecules with different molecular weights and their corresponding molecular weights in a polymer.

In the present disclosure, a weight-average molecular weight of a polymer may be tested by methods known in the art, such as gel chromatography, for example using a Waters 2695 Isocratic HPLC gel chromatograph (a differential refractive index detector 2141). In some embodiments, the test method used a sample of polystyrene solution with a mass fraction of 3.0% as a reference, and selected a matched chromatographic column (oiliness: Styragel HT5DMF7.8*300 mm+Styragel HT4). A fluoropolymer glue solution of 3.0% was prepared with a purified N-methylpyrrolidone (NMP) solvent, and the prepared solution stood for one day for subsequent use. In the test, a syringe was firstly used to draw tetrahydrofuran for flushing, and such flushing was repeated several times. 5 ml of the test solution was then drawn, air was removed from the syringe, and a needle tip was wiped to be dry. Finally, the sample solution was slowly injected into an injection port. Data were acquired after the readout had stabilized, and the weight-average molecular weight was read.

The fluoropolymer with the weight-average molecular weight in the range of 500, 000 to 800, 000 makes the glue solution to have a suitable viscosity, which is beneficial to further improve the fluidity and filterability of the insulation slurry and widen the process window for processing the insulation slurry. Moreover, the fluoropolymer with the suitable weight-average molecular weight facilitates formation of a three-dimensional network bonding structure, which helps the insulation coating to maintain effective adhesion.

In some embodiments, the viscosity of the glue solution that is prepared by dissolving the fluoropolymer in N-methylpyrrolidone is in a range of 1000 mPa·s to 3000 mPa·s, and a mass content of the fluoropolymer in the glue solution is 7% based on a total mass of the glue solution. In some embodiments, the viscosity of the glue solution that is prepared by dissolving the fluoropolymer in N-methylpyrrolidone is optionally one of 1000 mPa·s, 1500 mPa·s, 2000 mPa·s, 2500 mPa·s, and 3000 mPa·s, and the mass content of the fluoropolymer in the glue solution is 7% based on the total mass of the glue solution.

In the present disclosure, the viscosity of the glue solution of the fluoropolymer may be measured by methods known in the art, for example, by using a rotary viscosimeter.

The viscosity of the glue solution that is prepared by dissolving the fluoropolymer in N-methylpyrrolidone is in the range of 1000 mPa·s to 3000 mPa·s, and the mass content of the fluoropolymer in the glue solution is 7% based on the total mass of the glue solution. In this way, the insulation slurry using the fluoropolymer as a binder can effectively optimize the production process and improve the production efficiency without adding additional additives. Moreover, the glue solution in this viscosity range has both fluidity and viscosity, which can not only improve the adhesion of the insulation coating, but also achieve uniform coating, and thus is beneficial to improve stability of insulation coatings of batches.

In an embodiment of the present disclosure, a preparation method of a fluoropolymer is provided, which includes polymerizing at least one monomer of Formula I, at least one olefin monomer, and at least one monomer of Formula II under polymerizable conditions to prepare the fluoropolymer. The molar content of the monomer of Formula I is in a range of 60% to 80% based on a total mole of the at least one monomer of Formula I, the at least one olefin monomer, and the at least one monomer of Formula II. Formula I and Formula II are shown below, 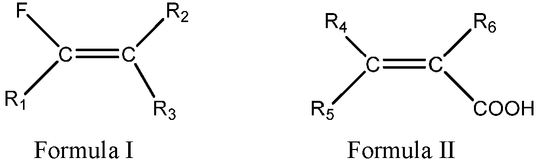 where R₁, R₂ and R₃ each are independently selected from hydrogen, fluorine, chlorine, or C₁₋₃ alkyl containing at least one fluorine atom, and R₄, R₅ and R₆ each are independently selected from hydrogen, or substituted or unsubstituted C₁₋₅ alkyl.

As used herein, the term "polymerizable conditions" refers to conditions including temperatures, pressures, reactant concentrations, optional solvents/diluents, reactant mixing/addition parameters selected by those skilled in the art, and other conditions conducive to the reaction of one or more monomers in at least one polymerization reactor.

Compared with the traditional binders, the fluoropolymer prepared by this method can improve the filterability and flowability of the slurry, such that the slurry does not gel after standing for 6 hours, significantly widening the process window of the slurry and improving the processability of the slurry. In this way, the slurry can meet the production requirements of the insulation coating without adding a dispersant, which is beneficial to optimize the production process of the insulation coating and improve the production efficiency thereof.

In some embodiments, R₁ is fluorine, R₂ and R₃ each include at least one independently selected from a group consisting of hydrogen, fluorine, chlorine, and trifluoromethyl, and R₅ and R₆ each include at least one independently selected from a group consisting of hydrogen and methyl.

In some embodiments, at least two monomers of Formula I are supplied during the preparation of the polymer, in which one of the at least two monomers of Formula I is polyvinylidene fluoride. The addition of different monomers helps to reduce the long chain order of the fluoropolymer, reduce the crystallinity, and improve the flexibility of the fluoropolymer.

In some embodiments, the polymerization reaction includes first-stage polymerization and second-stage polymerization.

In the first-stage polymerization, a first initiator, an emulsifier, at least one monomer of Formula I and a solvent are provided for the first-stage polymerization. The at least one monomer of Formula I is continuously supplied during the first-stage polymerization, to maintain an initial reaction pressure.

In the second-stage polymerization, after a period of reaction, an olefin monomer and a monomer of Formula II are supplied into a reaction vessel for the second-stage polymerization. When the pressure in the reaction vessel is reduced to be smaller than or equal to 0.5 MPa, the reaction is stopped, solid-liquid separation is performed, and a solid phase is retained.

As used herein, the term "continuously supplying" refers to slow, little, and incremental addition of the monomers.

In some embodiments, the first initiator is a persulfate salt, which may include at least one of potassium persulfate or ammonium persulfate. Potassium persulfate effectively decomposes above 60°C to produce free radical ions or ionic free radicals, which are suitable to be used as initiators for emulsion polymerization.

In some embodiments, the emulsifier is an alkali metal salt of perfluorooctanoic acid, which is optionally a sodium salt of perfluorooctanoic acid.

In some embodiments, the solvent is an aqueous solvent, which is optionally deionized water.

The method of the present disclosure includes obtaining the fluoropolymer having high thermal stability by continuously supplying the monomer of Formula I to form a fluorine-containing chain segment; and then supplying the monomer of Formula II and the olefin monomer to reduce contact of the fluorine-containing chain segment with the external environment, to effectively alleviate the gelation phenomenon caused by the fluorine element. The fluoropolymer prepared by this method is more effective in improving the filterability and flowability of the insulation slurry than the fluoropolymer prepared by simultaneously performing polymerization while supplying all the monomers into the reaction vessel, further widening the process window of the slurry, and contributing to improving the production efficiency of the insulation coating.

**In** some implementations, the first-stage polymerization has an initial reaction pressure in a range of 5.5 MPa to 7.5 MPa and a reaction temperature in a range of 70°C to 90°C.

**In** some embodiments, the second-stage polymerization includes: when the mass of the supplied monomer of Formula I is in a range of 70% to 85% of a total mass of the supplied monomers of Formula I during the polymerization reaction, supplying a mixed gas of the monomer of Formula I and the olefin monomer into the reaction vessel, and maintaining the initial reaction pressure to continuously perform the reaction; and supplying a mixture of the olefin monomer and the monomer of Formula II into the reaction vessel after all the monomers of Formula I have been supplied into the reaction vessel.

Before supplying the monomer of Formula II into the reaction vessel, a mixed gas of the monomer of Formula I and the olefin monomer was supplied into the reaction vessel. The olefin monomer is used as a bridge, which helps to overcome the problems of large reaction difference and poor compatibility between the monomer of Formula I and the monomer of Formula II, and improves the polymerization degree of the fluoropolymer.

In some embodiments, a ratio of a total mole of the supplied olefin monomers to the total mole of the supplied monomers of Formula I during the polymerization reaction is in a range of 1: 16 to 1: 2.

In some embodiments, a ratio of a total mole of the supplied monomers of Formula II to the total mole of the supplied monomers of Formula I during the polymerization reaction is in a range of 1: 16 to 1: 3.

In some embodiments, a molar ratio of the olefin monomers to the monomers of Formula I in the mixed gas is in a range of 1: 1 to 2: 1.

In some embodiments, a molar ratio of the olefin monomers to the monomers of Formula II in the mixture is in a range of 3: 1 to 4: 1.

In some embodiments, the second-stage polymerization further includes adding the first initiator and a second initiator to the reaction vessel before supplying the mixed gas of the monomer of Formula I and the olefin monomer into the reaction vessel.

In some embodiments, the second initiator is a thiosulfate salt, which may be sodium thiosulfate. The thiosulfate salt is used as a reducing agent, and readily reacts with the first initiator of persulphate in the reaction vessel to generate two free radicals, effectively initiating polymerization of the olefin monomer.

In some embodiments, the second-stage polymerization further includes adding the second initiator to the reaction vessel before supplying the mixture of the olefin monomer and the monomer of Formula II into the reaction vessel.

In an embodiment of the present disclosure, application of the fluoropolymer of any one of the embodiments in a secondary battery is provided. Alternatively, the secondary battery includes at least one of a lithium ion battery, a sodium ion battery, a magnesium ion battery, or a potassium ion battery. In some embodiments, application of a fluoropolymer as a binder in a secondary battery is provided. In some embodiments, application of a fluoropolymer as a binder for an insulation coating in a secondary battery is provided.

### [Insulation Coating]

In an embodiment of the present disclosure, an insulation coating including a binder and an inorganic insulating material is provided, and the binder is the fluoropolymer in any one of the embodiments.

As used herein, the term "binder" refers to a chemical compound, a polymer, or a mixture that forms a gel solution or a gel dispersion liquid in a dispersion medium.

In the present disclosure, the term "inorganic insulating material" refers to an inorganic material having a resistivity greater than 10⁶ Ω·cm and precursors thereof, which includes, but is not limited to, boehmite, barium carbonate, barium sulphate, alumina, zirconium dioxide, calcium carbonate, and silica.

In some embodiments, the inorganic insulating material includes boehmite. Boehmite(AlOOH) is a precursor of γ-Al₂O₃, which has excellent adhesion with a current collector and is not prone to fall off as an insulation coating. In some embodiments, the inorganic insulating material includes zirconium dioxide. The zirconium dioxide has a high electrical resistance and is suitable for preparing insulation coatings.

In some embodiments, the dispersion medium for the binder is an aqueous solvent, such as deionized water. That is, the binder is dissolved in the aqueous solvent.

In some embodiments, the dispersion medium for the binder is an oily solvent, and examples of the oily solvent include, but are not limited to, dimethylacetamide, N,N-dimethylformamide, N-methylpyrrolidone, acetone, dimethylcarbonate, ethylcellulose, and polycarbonate. That is, the binder is dissolved in the oily solvent.

In some embodiments, the binder is used to maintain the inorganic insulating materials in place and adhere them to the current collector to form an insulation coating.

The insulation coating is easy to process and has good uniformity, which help to improve battery productivity.

In some embodiments, the mass content of the binder is in a range of 7.0% to 13.0% based on a total mass of the insulation coating. In some embodiments, the mass content of the binder may be selected to be one of 7.0%, 8.0%, 9.0%, 10.0%, 11.0%, 12.0%, and 13.0% based on the total mass of the insulation coating.

When the mass content of the binder is in the range of 7.0% to 13.0% of the total mass of the insulation coating, the insulation slurry has a suitable viscosity. In this way, the fluidity and filterability of the insulation slurry are further improved, and the process window for processing the insulation slurry is further widened. Furthermore, a suitable range of the mass content of the binder ensures that the insulation coating has sufficient adhesion to the current collector.

In some embodiments, the inorganic insulating material includes a colored oxide, which may include at least one selected from a group consisting of black zirconium dioxide, yellow zirconium dioxide, red zirconium dioxide, and green zirconium dioxide. In some embodiments, the colored oxide is a colored zirconium dioxide. In some embodiments, the inorganic insulating material includes black zirconium dioxide.

The applicant has unexpectedly discovered that the inclusion of a colored oxide in the insulation coating helps to improve the laser cutting quality and laser cutting speed of the electrode plate. The laser cutting refers to the technology of machining a material by irradiating a workpiece with a focused laser beam having a high power density to rapidly heat, melt, vaporize, ablate, or decompose the irradiated material. The application of the laser cutting technology in the secondary battery mainly includes laser electrode plate cutting, tab cutting, separator cutting, and the like. At present, there are many problems in the laser electrode plate cutting, such as more burrs in the cutting region and the limited maximum cutting speed. In the related art, the inorganic insulating materials are generally colorless or white powders. The applicant has found that the inclusion of a colored oxide in the inorganic insulating materials can increase the maximum cutting speed of the electrode plates by more than 30%, which contributes to substantial increase in the production capacity of the battery. Furthermore, the colored oxide in the inorganic insulating materials can reduce the heat affected zone of laser, improve the cutting quality, reduce the cutting burr, and reduce the impact of processing on the battery performance.

In some embodiments, the mass content of the colored oxide is in a range of 0.2% to 3% based on the total mass of the insulation coating.

When the mass content of the colored oxide in the insulation coating is in the range of 0.2% to 3%, it can not only improve the cutting speed in the laser-cutting forming process of the electrode plate, but also take into account the raw material cost, which help to improve the laser cutting performance with the maximum efficiency.

In some embodiments, the colored oxide is black zirconia. When the mass content of the colored oxide in the insulation coating is more than 3.0%, there is no color difference between the insulation coating and the active material layer, and the laser cutting system is difficult to identify and position, which are not conducive to the accurate cutting of dimension.

In an embodiment of the present disclosure, a preparation method of an insulation coating includes: preparing a glue solution by dispersing a binder in a solvent, the binder being the fluoropolymer in any one of the above embodiments; mixing an inorganic insulating material with the glue solution, and stirring the inorganic insulating material and the glue solution to prepare a slurry, a solid content of the slurry being in a range of 30% to 40%; and applying the slurry to a current collector to prepare an insulation coating.

The solid content of the slurry is in the range of 30% to 40%. On one hand, the slurry has a suitable viscosity to facilitate subsequent coating and drying, and on the other hand, the suitable viscosity of the slurry can improve the stability of the slurry and facilitate the preservation of the slurry.

The insulation coating prepared by the above method has a high efficiency and does not need to add other additives, which are beneficial to save the production process and improve the production efficiency.

In some embodiments, the slurry has a viscosity in a range of 2500 mPa·s to 4000 mPa·s when the solid content of the slurry is in the range of 30% to 40%. In some embodiments, when the solid content of the slurry is in the range of 30% to 40%, the viscosity of the slurry may be one of 2750 mPa·s, 3000 mPa·s, 3250 mPa·s, 3500 mPa·s, 3750 mPa·s, and 4000 mPa·s.

The slurry with the solid content in the range of 30% to 40% has the viscosity in the range of 2500 mPa·s to 4000 mPa·s, and thus can be directly used in the production of coatings without adding additional additives, which is beneficial to improve the production efficiency and reduce the production cost.

In some embodiments, the mixing the inorganic insulating material with the glue solution includes mixing the inorganic insulating materials rather than a colored oxide with the glue solution to obtain a mixture, stirring the mixture, adding the colored oxide in the stirred mixture, and stirring the colored oxide and the mixture to prepare the slurry.

The addition of the colored oxide at the final stage of the slurry preparation process is beneficial to improve the uniformity of colors of the prepared insulation coating to improve the subsequent laser cutting speed and quality.

In an embodiment of the present disclosure, a secondary battery is provided. The secondary battery includes a positive electrode plate, a separator, a negative electrode plate, and an electrolyte. The positive electrode plate and/or the negative electrode plate include the insulation coating described in any one of the embodiments. In some embodiments, the secondary battery includes at least one of a lithium ion battery, a sodium ion battery, a magnesium ion battery, or a potassium ion battery. During charging and discharging of the battery, active ions, such as lithium ions, are intercalated and deintercalated between the positive electrode plate and the negative electrode plate. The electrolyte serves to conduct ions between the positive electrode plate and the negative electrode plate. The separator is arranged between the positive electrode plate and the negative electrode plate, and mainly functions to prevent the positive and negative electrodes from being short-circuited while enabling the ions to pass therethrough.

### [Positive Electrode Plate]

The positive electrode plate includes a positive electrode current collector and a positive electrode active material layer and an insulation coating provided on at least one surface of the positive electrode current collector.

As an example, the positive electrode current collector has two surfaces opposite to each other in a thickness direction thereof, and the positive electrode active material layer and the insulation coating are disposed on one or both of the two opposite surfaces of the positive electrode current collector.

In some embodiments, the positive electrode current collector may be a metal foil or a composite current collector. For example, the metal foil is an aluminum foil. The composite current collector may include a macromolecular material base-layer and a metal layer formed on at least one surface of the macromolecular material base-layer. The composite current collector may be formed by forming a metal material (such as, aluminum, aluminum alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the positive electrode active material is a positive electrode active material for a battery known in the field. As an example, the positive electrode active material includes at least one of lithium-containing phosphate of an olivine structure, lithium transition metal oxide, or respective modified compounds thereof. However, the present disclosure is not limited to these materials, and other traditional materials that may be used as positive electrode active materials of the battery may be used. These positive electrode active materials may be used alone or in combinations of two or more. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂, which may be referred to as NCM₃₃₃), LiNi_{0.5}Co_{0.2}Mn_{0.3}O₂ (which may be referred to as NCM₅₂₃), LiNi_{0.5}Co_{0.25}Mn_{0.25}O₂ (which may be referred to as NCM₂₁₁), LiNi_{0.6}Co_{0.2}Mn_{0.2}O₂ (which may be referred to as NCM₆₂₂), LiNi_{0.8}Co_{0.1}Mn_{0.1}O₂ (which may be referred to as NCM₈₁₁), lithium nickel cobalt aluminum oxide (e.g., LiNi_{0.85}Co_{0.15}Al_{0.05}O₂), or modified compound thereof. Examples of the lithium-containing phosphate of olivine structure may include, but are not limited to, at least one of lithium iron phosphate (such as LiFePO₄, which may be referred to as LFP), a composite material of lithium iron phosphate and carbon, lithium manganese phosphate (such as LiMnPO₄), a composite material of lithium manganese phosphate and carbon, lithium iron manganese phosphate, or a composite material of lithium iron manganese phosphate and carbon.

In some embodiments, the positive electrode active material layer further optionally includes a binding agent. As an example, the binding agent may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode active material layer further optionally includes a conductive agent. As an example, the conductive agent may include at least one of superconducting carbon, acetylene black, carbon black, Ketjen black, carbon dots, carbon nanotubes, graphene, or carbon nanofibers.

In some embodiments, the positive electrode plate is prepared by the conventional ways below. The above components for preparing the positive electrode active material layer, such as the positive electrode active material, the conductive agent, the binding agent, and any other components, are dispersed in a solvent (e.g., N-methylpyrrolidone) to form positive electrode slurry. The positive electrode slurry is then coated on the positive electrode current collector, and the positive electrode active material layer is obtained after drying, cold pressing, and other processes. The above components for preparing the insulation coating, such as a fluoropolymer, are dispersed in a solvent (e.g., N-methylpyrrolidone) to form a glue solution. An inorganic insulating material and the glue solution are mixed and stirred to prepare an insulation slurry. The insulation slurry is coated on the positive electrode current collector along an edge of the positive electrode active material layer, and the insulation coating is obtained after drying, cold pressing, and other processes. The positive electrode plate can be obtained by obtaining the positive electrode active material layer and the insulation coating with the same method on another side of the current collector.

### [Negative Electrode Plate]

The negative electrode plate includes a negative electrode current collector and a negative electrode active material layer and an insulation coating provided on at least one surface of the negative electrode current collector.

As an example, the negative electrode current collector has two surfaces opposite to each other in a thickness direction thereof, and the negative electrode film layer is disposed on one or both of the two opposite surfaces of the negative electrode current collector.

In some embodiments, the negative electrode current collector may be a metal foil or a composite current collector. For example, the metal foil is a copper foil. The composite current collector may include a macromolecular material base-layer and a metal layer formed on at least one surface of the macromolecular material base-material. The composite current collector may be formed by forming a metal material (such as, copper, copper alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the negative electrode active material may be a negative electrode active material for batteries known in this art. As an example, the negative electrode active material may include at least one of artificial graphite, natural graphite, soft carbon, hard carbon, silicon-based materials, tin-based materials, or lithium titanate. The silicon-based material may be selected from at least one of a group consisting of elemental silicon, silicon oxides, silicon carbon compounds, silicon nitrogen compounds, and silicon alloys. The tin-based material may be selected from at least one of a group consisting of elemental tin, tin oxides, and tin alloys. However, the present disclosure is not limited to these materials, and other conventional materials that can be used as a negative electrode active material for a battery can also be used. These negative electrode active materials may be used alone or in combination of two or more.

In some embodiments, the negative electrode active material layer further optionally includes a binding agent. The binding agent may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from one or more of superconducting carbon, acetylene black, carbon black, Ketjen black, carbon dots, carbon nanotubes, graphene, and carbon nanofibers.

In some embodiments, the negative electrode active material layer may optionally include other additives, such as a thickening agent, e.g., sodium carboxymethyl cellulose (CMC-Na).

In some embodiments, the negative electrode plate is prepared as follows. The above components for preparing the negative electrode plate, such as the negative electrode active material, the conductive agent, the binding agent, and any other components, are dispersed in a solvent (for example, deionized water) to form negative electrode slurry. The negative electrode slurry is then coated on the negative electrode current collector, and the negative electrode plate is obtained after drying, cold pressing and other processes. The above components for preparing an insulation coating, such as a fluoropolymer, are dispersed in a solvent (such as, N-methylpyrrolidone) to form a glue solution. An inorganic insulating material and the glue solution are mixed and stirred to prepare an insulation slurry. The insulation slurry is coated on the negative electrode current collector along an edge of the negative electrode active material layer, dried, cold pressed, etc. to obtain the insulation coating layer. A negative electrode plate can be obtained by obtaining a negative electrode active material layer and an insulation coating with the same method on another side of the negative electrode current collector.

### [Electrolyte]

The electrolyte functions to conduct ions between the positive electrode plate and the negative electrode plate. The present disclosure has no specific limitation on the type of the electrolyte, which can be selected according to requirements. For example, the electrolyte may be in a liquid state, a gel state, or an all-solid state.

In some embodiments, the electrolyte is an electrolytic solution. The electrolytic solution includes an electrolyte salt and a solvent.

In some embodiments, the electrolyte salt may be selected from one or more of lithium hexafluorophosphate, lithium tetrafluoroborate, lithium perchlorate, lithium hexafluoroarsenate, lithium bis (fluorosulfonyl) imide, lithium bis (trifluoromethanesulfonyl) imide, lithium difluorophosphate, lithium difluoro(oxalato)borate, lithium bis(oxalate) borate, lithium difluorobisoxalato phosphate, and lithium tetrafluorooxalate phosphate.

In some embodiments, the solvent may include at least one selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, methyl ethyl sulfone, and diethyl sulfone.

In some embodiments, the electrolytic solution further optionally includes an additive. For example, the additive may include a negative electrode film-forming additive and a positive electrode film-forming additive, and may further include additives capable of improving performance of the battery, such as additives for improving overcharge performance of the battery and additives for improving high-temperature or low-temperature performance of the battery.

### [Separator]

In some embodiments, the secondary battery further includes an isolation film. The type of the isolation film is not particularly limited in the present disclosure, and may be any well-known isolation film with a porous structure that has good chemical stability and mechanical stability.

In some embodiments, a material of the isolation film may be selected from at least one of glass fiber, non-woven fabric, polyethylene, polypropylene, and polyvinylidene fluoride. The isolation film may be a single-layer film or may be a multilayer composite film, which is not particularly limited. When the isolation film is a multilayer composite film, materials of the layers may be the same or different, which is not particularly limited.

In some embodiments, the positive electrode plate, the negative electrode plate and the isolation film is made into an electrode assembly by means of a winding process or a lamination process.

In some embodiments, the secondary battery may include an outer package. The outer package is configured to package the above electrode assembly and the electrolyte.

In some embodiments, the outer package of the secondary battery may be a hard housing, such as a hard plastic housing, an aluminum housing, and a steel housing. The outer package of the secondary battery may be a soft package, such as a bag-type soft package. A material of the soft package may be plastic, such as polypropylene, polybutylene terephthalate, and polybutylene succinate.

The shape of the secondary battery is not particularly limited in the present disclosure, and may be cylindrical, square, or any other shape. For example, FIG. 2 illustrates a secondary battery 5 having a square structure as an example.

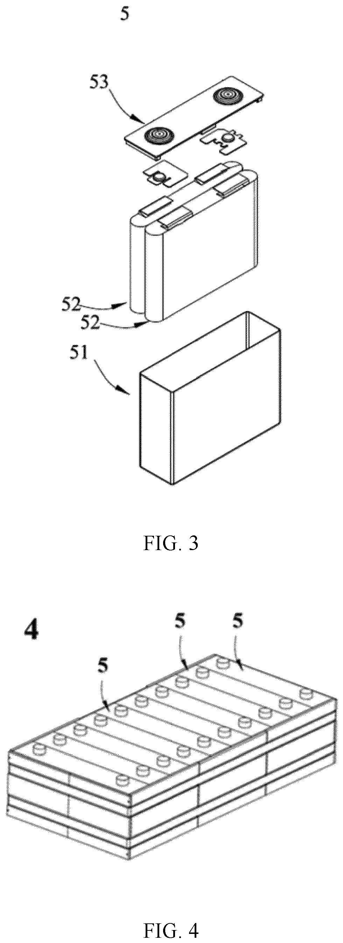

In some embodiments, referring to FIG. 3, the outer package includes a casing 51 and a cover plate 53. The casing 51 includes a bottom plate and a side plate connected to the bottom plate, and the bottom plate and the side plate enclose an accommodating cavity. The casing 51 has an opening in communication with the accommodating cavity, and the cover plate 53 can cover the opening to enclose the accommodating cavity. The positive electrode plate, the negative electrode plate and the isolation film forms an electrode assembly 52 through a winding process or a lamination process. The electrode assembly 52 is enclosed in the accommodating cavity. The electrolyte is immersed in the electrode assembly 52. The secondary battery 5 may include one or more electrode assemblies 52, and those skilled in the art can select according to specific actual requirements.

In some embodiments, the secondary battery may be assembled into a battery module, and the battery module may include one or more secondary batteries, the specific number of which can be selected by those skilled in the art according to the application and a capacity of the battery module.

FIG. 4 illustrates a battery module 4 as an example. Referring to FIG. 4, a plurality of secondary batteries 5 of the battery module 4 is sequentially arranged along a length direction of the battery module 4. Alternatively, the secondary batteries may be arranged in any other manner. The plurality of secondary batteries 5 can be further fixed by fasteners.

Alternatively, the battery module 4 may further include a shell having an accommodating space, and the plurality of secondary batteries 5 is accommodated in the accommodating space.

In some embodiments, the above battery modules may be assembled into a battery pack, and the number of the battery modules contained in the battery pack may be one or more, specific number of which can be selected by those skilled in the art according to the application and capacity of the battery pack.

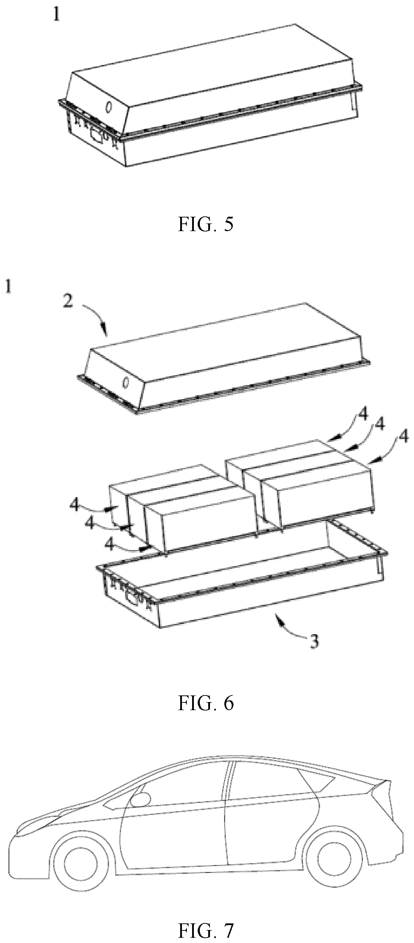

FIG. 5 and FIG. 6 show a battery pack 1 as an example. Referring to FIG. 5 and FIG. 6, the battery pack 1 includes a battery box and a plurality of battery modules 4 provided in the battery box. The battery box includes an upper box body 2 and a lower box body 3, and the upper box body 2 can cover the lower box body 3 to form a closed space for accommodating the battery module 4. The plurality of battery modules 4 may be arranged in the battery box in any manner.

In addition, the present disclosure further provides a powered device, and the powered device includes at least one of the secondary battery, the battery module, or the battery pack according to the present disclosure. The secondary battery, the battery module or the battery pack may be used as a power supply for the powered device, or may be used as an energy storage unit of the powered device. The powered device may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electrical train, a ship, a satellite, an energy storage system and the like, but it is not limited thereto.

The powered device may select the secondary battery, the battery module, or the battery pack according to use requirements thereof.

FIG. 7 illustrates a powered device as an example. The powered device is a pure electric vehicle, a hybrid electric vehicle, a plug-in hybrid electric vehicle and the like. In order to meet requirements of the powered device for high power and high energy density of the secondary battery, a battery pack or a battery module can be adopted.

As another example, the powered device may be a cell phone, a tablet computer, a notebook computer, and the like. The powered device is generally required to be light and thin, and the secondary battery may be used as a power source.

### Examples

Hereinafter, examples of the present application will be described. The examples described below are exemplary only and should not be construed as limiting the present application. When specific techniques or conditions are not specified in the examples, they are performed according to techniques or conditions described in the literature in the art or according to the product description. The used reagents or instruments without indicating the manufacturer are common products that can be obtained commercially.

### I. Method of Preparation

### Example 1

### 1) Preparation of Binder (Fluoropolymer)

30 kg of deionized water that has a conductivity smaller than or equal to 2 µs/cm, 21g of perfluorooctanoic acid sodium salt and 71.4 g of a potassium persulfate solution with a concentration of 5% were successively added into a reaction kettle, and the reaction kettle was then closed.

The reaction kettle was evacuated and filled with nitrogen, and the operation was repeated until the oxygen concentration in the reaction kettle is smaller than 100 ppm.

A vinylidene fluoride monomer was introduced into the reaction kettle at a kettle pressure of 7.5 MPa.

The temperature in the reaction kettle was increased to 85°C to start a reaction, and the vinylidene fluoride monomer was continuously supplied during the reaction while maintaining the constant reaction pressure in the reaction kettle.
when the supplied vinylidene fluoride monomer was 80% of a total mass of the vinylidene fluoride monomers, 30.6 g of the potassium persulfate solution with the concentration of 5% and 19.2 g of sodium thiosulfate with a concentration of 5% were added, and a mixed gas of the vinylidene fluoride monomer and butadiene was introduced into the reaction kettle while maintaining the reaction pressure. A molar ratio of the vinylidene fluoride monomer to the butadiene monomer was 2: 3.

When all the vinylidene fluoride monomer of 3783.7 was added and the butadiene monomer was added in an amount of 50% of a total amount of butadiene, 28.8 g of the remaining sodium thiosulfate with the concentration of 5% was added, and 931 g of the remaining butadiene monomer and 354.7 g of an acrylic acid monomer were introduced into the reaction kettle while maintaining the reaction pressure.

When the reaction was completed, the pressure in the reaction kettle was reduced to 0.2 MPa, and unreacted butadiene monomer was recovered. The reaction product was coagulated, washed, separated, dried, and pulverized to obtain a binder of vinylidene fluoride-butadiene-acrylic acid copolymer.

### 2) Preparation of Insulation Slurry

13000 g of N-methylpyrrolidone was added into a stirring tank of 35 L.

700 g of the prepared vinylidene fluoride-butadiene-acrylic acid copolymer powder was added into N-methylpyrrolidone, the stirring speed was set to be 1000 rpm, the stirring duration was set to be 60 minutes, and stirring was completed to obtain a pre-prepared glue solution.

6195 g of boehmite powder was added into the pre-cast glue solution. The stirring speed was set to be 1200 rpm, and the stirring duration was set to be 60 minutes. The cooling water circulation was started in the stirring tank, and stirring was finished to obtain a boehmite slurry.

105 g of black zirconia powder was added to the boehmite slurry. The stirring speed was set to be 1200 rpm, and the stirring duration was set to be 60 minutes. The cooling water circulation was started in the stirring tank, vacuumizing was started, and the stirring was finished to obtain an insulation slurry.

### 3) Preparation of Insulation Coating

The above insulation slurry was coated on an aluminium foil of 13 µm with a coating thickness of 15 ± 1 µm. The slurry was dried to form an insulation coating, and the same method was applied to another side of the aluminium foil to obtain an insulation coating. A total thickness of the insulation coating and the aluminium foil on the two sides was 43 ± 2 µm.

Preparation methods of insulation coatings of Examples 2 to 26 and preparation methods of insulation coatings of Comparative Examples 1 to 4 were similar to that of Example 1, but parameters of the binder preparation and a ratio of black zirconia in the slurry were adjusted.

In Examples 2 to 7, the ratio of each of monomers of the binder was adjusted, and other parameters were consistent with those in Example 1. Specific parameters are shown in Tables 1 and 2.

In Examples 8 to 11, the reaction conditions in the synthesis of the binders were adjusted such that the binders had different weight-average molecular weights, but other parameters were consistent with those in Example 6. Specific parameters are shown in Tables 1 and 2. Specifically, in Example 8, a fluoropolymer having a weight-average molecular weight of 500,000 was prepared in substantially the same manner as that in Example 6, except that the addition amount of the potassium persulfate solution with a concentration of 5% was adjusted from 71.4 g to 78.54 g.

In Example 9, the fluoropolymer having a weight-average molecular weight of 800,000 was prepared in the same manner as that in Example 6, except that the reaction temperature was adjusted from 85°C to 80°C, and the addition amount of the potassium persulfate solution with a concentration of 5% was adjusted from 71.4 g to 67.83 g.

In Example 10, the fluoropolymer having a weight-average molecular weight of 900,000 was prepared in the same manner as that in Example 6, except that the reaction temperature was adjusted from 85°C to 80°C, and the addition amount of the potassium persulfate solution with a concentration of 5% was adjusted from 71.4 g to 64.26 g.

In Example 11, the fluoropolymer having a weight-average molecular weight of 400,000 was prepared in substantially the same manner as that in Example 6, except that the addition amount of the potassium persulfate solution with a concentration of 5% was adjusted from 71.4 g to 82.11 g.

In Examples 12 to 15, the mass fraction of the binder in the slurry was adjusted, and other parameters were consistent with those in Example 6. Specific parameters are shown in Tables 1 and 2.

In Examples 16 to 19, the solid content of the slurry was adjusted, and other parameters were consistent with those in Example 6. Specific parameters are shown in Tables 1 and 2.

In Example 20, butadiene in the synthetic monomer of the binder was replaced with propylene, and the other parameters were consistent with those in Example 6. Specific parameters are shown in Table 1 and Table 2.

In Example 21, the binder was a vinylidene fluoride-butadiene-acrylic acid copolymer prepared by a conventional method. The binder was synthesized by the following method. 30 kg of deionized water that has a conductivity smaller than or equal to 2 µs/cm, 21 g of a alkali metal salt of perfluorooctanoic acid, and 71.4 g of the potassium persulfate solution with a concentration of 5% were successively added into the reaction kettle, and the reaction kettle was then closed.

The reaction kettle was evacuated and filled with nitrogen, and the operation was repeated until the oxygen concentration in the reaction kettle is smaller than 100 ppm.

A vinylidene fluoride monomer, a butadiene monomer and 720 g of an acrylic acid monomer were added to the reaction kettle until a kettle pressure was up to 7.5 MPa. The molar ratio of the vinylidene fluoride monomer to the butadiene monomer is 8:1.

The temperature in the reaction kettle was increased to 85°C to start a reaction. The vinylidene fluoride monomer and the butadiene monomer were continuously introduced during the reaction while maintaining the constant reaction pressure in the kettle. A total mass of the introduced vinylidene fluoride monomer and a total mass of the introduced butadiene monomer were 5120 g and 540 g, respectively.

When the reaction was completed, the pressure in the reaction kettle was reduced to be in a range of 0.0 MPa to 0.5 MPa, and unreacted butadiene monomer was recovered. The reaction product was coagulated, washed, separated, dried, and pulverized to obtain a binder of vinylidene fluoride-butadiene-acrylic acid copolymer.

In Examples 22 to 26, the mass contents of black zirconium dioxide in the slurries were changed, and other parameters were consistent with those in Example 6. Specific parameters are shown in Table 3.

In Comparative Example 1, a vinylidene fluoride polymer was used as a binder, which was HSV900 from Arkema in France.

In Comparative Example 2, the binder was a vinylidene fluoride-butadiene copolymer, and the synthetic method of the binder was substantially the same as that in Example 1, except that when the supplied vinylidene fluoride monomer was 80% by weight of the total mass of vinylidene fluoride monomer, 30.6 g of a potassium persulfate solution with a concentration of 5% and 19.2 g of sodium thiosulfate with a concentration of 5% were added. A mixed gas of the vinylidene fluoride monomer and butadiene was introduced into the reaction kettle while maintaining the reaction pressure. The mass of butadiene in the mixed gas was 2160 g, and the mass of the vinylidene fluoride monomer was 756.7 g.

In Comparative Example 3, the binder was a vinylidene fluoride-butadiene copolymer, and the synthetic method of the binder was substantially the same as that in Example 1, except that when the supplied vinylidene fluoride monomer was 80% by weight of the total mass of vinylidene fluoride monomer, 30.6 g of a potassium persulfate solution with a concentration of 5% and 19.2 g of sodium thiosulfate with a concentration of 5% were added. 2880 g of acrylic acid was added into the reaction kettle while maintaining the reaction pressure, and 756.7 g of the vinylidene fluoride monomer was continuously supplied.

In Comparative Example 4, the binder was a vinylidene fluoride-butadiene copolymer, and the synthetic method of the binder was substantially the same as that in Example 1, but the molar contents of the synthesized monomers were adjusted, see Tables 1 and 2 for details.

The relevant parameters of the insulation coatings of Examples 1 to 26 and Comparative Examples 1 to 4 as described above are shown in Tables 1, 2, and 3 below.

### II. Test Method

The insulation coatings obtained in the above Examples 1 to 26 and Comparative Examples 1 to 4 were subjected to performance tests. The test methods are described as follows.

### 1. Weight-average Molecular Weight Test

A gel chromatograph of Waters model 2695 Isocratic HPLC (a differential refraction detector of 2141) was used. A sample of a polystyrene solution with a mass fraction of 3.0% was a reference, and a matched chromatographic column (oiliness: Styragel HT5DMF7.8×300 mm+Styragel HT4) was selected. A fluoropolymer glue solution of 3.0% was prepared with a purified N-methylpyrrolidone(NMP) solvent, and the prepared solution stood for one day for subsequent use. In the test, a syringe was firstly used to draw tetrahydrofuran for flushing, and such flushing was repeated several times. 5 ml of the test solution was then drawn, air was removed from the syringe, and a needle tip was wiped to be dry. Finally, the sample solution was slowly injected into an injection port. Data were acquired after the readout had stabilized, and the weight-average molecular weight was read.

### 2. Vscosity Test of Glue Solution

The fluoropolymer was dissolved in the N-methylpyrrolidone(NMP) solvent, and a glue solution with a solid content of 7% was prepared. A suitable rotor was selected, and a viscometer was fixed. The glue solution was placed below the viscometer, and a slurry just submerged the scale mark of the rotor. The model of the viscometer was NDJ-5S available from Shanghai Fangrui, and the rotor was 62# (in a range of 500 mPa·s to 2500 mPa·s) and 63 # (in a range of 2500 mPa·s to 10000 mPa·s). The rotation speed was 12 rpm, the test temperature was 25°C, the test duration was 5 mins, and the data was read out after being stable.

### 3. Slurry Viscosity Test

The viscosity of the glue solution was measured using a rotary viscosimeter. a suitable rotor was selected, and the rotor of the viscometer was fixed. The slurry was placed below the rotor of the viscometer, and the slurry just submerged the scale mark of the rotor. The model of the viscometer was NDJ-5S available from Shanghai Fangrui, and the rotor was 63# (in a range of 2000 mPa·s to 10000 mPa·s) and 64# (in a range of 10000 mPa·s to 50000 mPa·s). The rotation speed was 12 rpm, the test temperature was 25°C, the test duration was 5 mins, and the data was read out after being stable.

### 4. Test for Solid Content of Slurry

A test method for the solid content is described below. A glass dish was prepared and a weight m₁ was recorded. A part of the prepared slurry was placed into the glass dish and a total weight m₂ was recorded. The dish containing the slurry was placed into a drying oven for heating for 1 h at a heating temperature of 120°C. The dried dish was weighed and a weight m₃ was recorded, where solid content = [(m₃-m₁)/(m₂-m₁)]×100%.

### 5. Test for Fluidity of Slurry

After the slurry stood for 6 h and 12 h, an appropriate amount of the slurry was taken with a medicine spoon, and observation whether the natural downward flow of the slurry was smooth was performed. If the natural downstream was smooth, it was determined as OK; if the fluidity was not good, the slurry appeared to be jelly-like and lumped, indicating the appearance of gel, which was determined as NG.

### 6. Test for Filtration Performance of Slurry

Firstly, a filter screen of 200 mesh was determined, and the filter screen was cut into 25 cm×25 cm with scissors. A clean beaker of 500 ml was found and ensured to be clean. The filter screen of 200 mesh was folded into a triangle, and 500 ml of the slurry was poured from the top of the filter screen, all at once. The time was recorded when the slurry flew from the tip of the filter screen into the beaker. The time of filtering 300 ml of the slurry was recorded.

### 7. Adhesion Test

With reference to GB-T2790-1995 national standard "Adhesive-180° Peel Strength Test Method for a Flexible-Bonded-to-Rigid Test Specimen Assembly", the adhesion test procedures of the Examples and Comparative Examples of the present disclosure are describe as follows. A test sample having a width of 30 mm and a length in a range of 100 mm to 160 mm was cut with a blade, and a special double-sided adhesive tape having a width of 20 mm and a length in a range of 90 mm to 150 mm was attached to a steel plate. The insulation coated side of the previously cut electrode plate sample was attached to the double-sided tape, and was rolled three times with a roller of 2 kg in the same direction. A paper tape having a width equal to the width of the electrode plate and a length of 250 mm was fixed to a current collector of the electrode plates, and they were fixed with a crepe glue. The power supply of the SAS tensile machine with a sensitivity of 1 N was turned on, the indicator light was on, and the limit block was adjusted to an appropriate position. An end of the steel plate that was not attached with an electrode plate was fixed with a lower fixture. The paper tape was folded upwardly, and was fixed with an upper fixture. The position of the upper fixture was adjusted by the "up" and "down" buttons on the manual control of the tensile machine. The test was then performed, and the values were read at a stretching speed of 50 mm/min. The bonding strength between the insulation coating and the current collector was characterized by the bonding force per unit length of the insulation coating, which was derived from dividing the force at which the electrode plate was balanced by the width of the adhesive tape.

### 8. Laser Cutting Test

A laser die cutting machine of Han's Laser was used. The laser output power was set to be 80% of the maximum output power, and the laser frequency was 1000 KHz. The maximum cutting speeds and the cutting qualities when cutting the electrode plates coated with the insulating coatings in the different Examples were compared with one another. If a CCD camera of the die cutting machine could recognize, it is determined as Y; if the CCD camera of the die cutting machine could not recognize, it is determined as N. The sectional morphology after laser cutting was observed by an optical microscope. If there was obvious metal burrs on the cut section, it was determined as failure; if there was no obvious metal burrs on the cut section, it was determined as pass. Samples were taken from one hundred batches of cut products, and a pass rate of the one hundred batches were calculated.

**Table 1 Parameters and Test Results for Examples 1 to 21 and Comparative Examples 1 to 4**

| Serial Number | Fluoropolymer | Monomer of Formula I | | Monomer of Formula II | | Olefin monomer | | Weight-ave rage molecular weight (ten thousand) |
|---|---|---|---|---|---|---|---|---|
| | | Name | Molar content | Name | Molar content | Name | Molar content | |
| Example 1 | Vinylidene fluoride-butadiene-ac rylic acid copolymer | Vinylidene fluoride | 60% | Acrylic acid | 5% | Butadiene | 35% | 65 |
| Example 2 | Vinylidene fluoride-butadiene-ac rylic acid copolymer | Vinylidene fluoride | 60% | Acrylic acid | 10% | Butadiene | 30% | 65 |
| Example 3 | Vinylidene fluoride-butadiene-ac rylic acid copolymer | Vinylidene fluoride | 60% | Acrylic acid | 20% | Butadiene | 20% | 65 |
| Example 4 | Vinylidene fluoride-butadiene-ac rylic acid copolymer | Vinylidene fluoride | 60% | Acrylic acid | 25% | Butadiene | 15% | 65 |
| Example 5 | Vinylidene fluoride-butadiene-ac rylic acid copolymer | Vinylidene fluoride | 80% | Acrylic acid | 5% | Butadiene | 15% | 65 |
| Example 6 | Vinylidene fluoride-butadiene-ac rylic acid copolymer | Vinylidene fluoride | 80% | Acrylic acid | 10% | Butadiene | 10% | 65 |
| Example 7 | Vinylidene fluoride-butadiene-ac rylic acid copolymer | Vinylidene fluoride | 80% | Acrylic acid | 15% | Butadiene | 5% | 65 |
| Example 8 | Vinylidene fluoride-butadiene-ac rylic acid copolymer | Vinylidene fluoride | 80% | Acrylic acid | 10% | Butadiene | 10% | 50 |
| Example 9 | Vinylidene fluoride-butadiene-ac rylic acid copolymer | Vinylidene fluoride | 80% | Acrylic acid | 10% | Butadiene | 10% | 80 |
| Example 10 | Vinylidene fluoride-butadiene-ac rylic acid copolymer | Vinylidene fluoride | 80% | Acrylic acid | 10% | Butadiene | 10% | 90 |
| Example 11 | Vinylidene fluoride-butadiene-ac rylic acid copolymer | Vinylidene fluoride | 80% | Acrylic acid | 10% | Butadiene | 10% | 40 |
| Example 12 | Vinylidene fluoride-butadiene-ac rylic acid copolymer | Vinylidene fluoride | 80% | Acrylic acid | 10% | Butadiene | 10% | 65 |
| Example 13 | Vinylidene fluoride-butadiene-ac rylic acid copolymer | Vinylidene fluoride | 80% | Acrylic acid | 10% | Butadiene | 10% | 65 |
| Example 14 | Vinylidene fluoride-butadiene-ac rylic acid copolymer | Vinylidene fluoride | 80% | Acrylic acid | 10% | Butadiene | 10% | 65 |
| Example 15 | Vinylidene fluoride-butadiene-ac rylic acid copolymer | Vinylidene fluoride | 80% | Acrylic acid | 10% | Butadiene | 10% | 65 |
| Example 16 | Vinylidene fluoride-butadiene-ac rylic acid copolymer | Vinylidene fluoride | 80% | Acrylic acid | 10% | Butadiene | 10% | 65 |
| Example 17 | Vinylidene fluoride-butadiene-ac rylic acid copolymer | Vinylidene fluoride | 80% | Acrylic acid | 10% | Butadiene | 10% | 65 |
| Example 18 | Vinylidene fluoride-butadiene-ac rylic acid copolymer | Vinylidene fluoride | 80% | Acrylic acid | 10% | Butadiene | 10% | 65 |
| Example 19 | Vinylidene fluoride-butadiene-ac rylic acid copolymer | Vinylidene fluoride | 80% | Acrylic acid | 10% | Butadiene | 10% | 65 |
| Example 20 | Vinylidene fluoride-acrylic acid copolymer | Vinylidene fluoride | 80% | Acrylic acid | 10% | Propylene | 10% | 65 |
| Example 21 | Vinylidene fluoride-butadiene-ac rylic acid copolymer prepared by a conventional method | Vinylidene fluoride | 80% | Acrylic acid | 10% | Butadiene | 10% | 65 |
| Comparative Example 1 | Vinylidene fluoride polymer | Vinylidene fluoride | 100% | Acrylic acid | / | Butadiene | / | 65 |
| Comparative Example 2 | Vinylidene fluoride-butadiene copolymer | Vinylidene fluoride | 60% | Acrylic acid | / | Butadiene | 40% | 65 |
| Comparative Example 3 | Vinylidene fluoride-acrylic acid copolymer | Vinylidene fluoride | 60% | Acrylic acid | 40% | Butadiene | / | 65 |
| Comparative Example 4 | Vinylidene fluoride-butadiene-ac rylic acid copolymer | Vinylidene fluoride | 90% | Acrylic acid | 5% | Butadiene | 5% | 65 |

**Table 2 Parameters and Test Results for Examples 1 to 21 and Comparative Examples 1 to 4**

| Serial Number | Fluoropolymer | Viscosity of binder (mPa•s) | Slurry property | | | | | | Insulating coating |
|---|---|---|---|---|---|---|---|---|---|
| | | | Mass fraction of binder | Solid content of slurry | Viscosity of slurry (mPa•s) | Filterabi lity | Fluidity for 6 h | Fluidity for 12 h | Adhesion (N/m) |
| Example 1 | Vinylidene fluoride-butadien e-acrylic acid copolymer | 1500 | 10.00% | 35.00% | 2300 | 6 | OK | OK | 35 |
| Example 2 | Vinylidene fluoride-butadien e-acrylic acid copolymer | 1700 | 10.00% | 35.00% | 2600 | 6 | OK | OK | 45 |
| Example 3 | Vinylidene fluoride-butadien e-acrylic acid copolymer | 1900 | 10.00% | 35.00% | 2700 | 7 | OK | OK | 45 |
| Example 4 | Vinylidene fluoride-butadien e-acrylic acid copolymer | 2100 | 10.00% | 35.00% | 2800 | 7 | OK | OK | 47 |
| Example 5 | Vinylidene fluoride-butadien e-acrylic acid copolymer | 2200 | 10.00% | 35.00% | 3300 | 10 | OK | OK | 51 |
| Example 6 | Vinylidene fluoride-butadien e-acrylic acid copolymer | 2300 | 10.00% | 35.00% | 3500 | 11 | OK | OK | 52 |
| Example 7 | Vinylidene fluoride-butadien e-acrylic acid copolymer | 2400 | 10.00% | 35.00% | 3700 | 12 | OK | OK | 56 |
| Example 8 | Vinylidene fluoride-butadien e-acrylic acid copolymer | 2000 | 10.00% | 35.00% | 2800 | 7 | OK | OK | 47 |
| Example 9 | Vinylidene fluoride-butadien e-acrylic acid copolymer | 2700 | 10.00% | 35.00% | 3800 | 12 | OK | OK | 63 |
| Example 10 | Vinylidene fluoride-butadien e-acrylic acid copolymer | 3100 | 10.00% | 35.00% | 4200 | 13 | OK | NG | 67 |
| Example 11 | Vinylidene fluoride-butadien e-acrylic acid copolymer | 1700 | 10.00% | 35.00% | 2650 | 6 | OK | OK | 43 |
| Example 12 | Vinylidene fluoride-butadien e-acrylic acid copolymer | 2300 | 7.00% | 35.00% | 3100 | 10 | OK | OK | 47 |
| Example 13 | Vinylidene fluoride-butadien e-acrylic acid copolymer | 2300 | 13.00% | 35.00% | 4000 | 12 | OK | OK | 64 |
| Example 14 | Vinylidene fluoride-butadien e-acrylic acid copolymer | 2300 | 5.00% | 35.00% | 2900 | 7 | OK | OK | 45 |
| Example 15 | Vinylidene fluoride-butadien e-acrylic acid copolymer | 2300 | 15.00% | 35.00% | 4200 | 12 | OK | NG | 67 |
| Example 16 | Vinylidene fluoride-butadien e-acrylic acid copolymer | 2300 | 10.00% | 25.00% | 2400 | 6 | OK | OK | 39 |
| Example 17 | Vinylidene fluoride-butadien e-acrylic acid copolymer | 2300 | 10.00% | 30.00% | 3100 | 10 | OK | OK | 45 |
| Example 18 | Vinylidene fluoride-butadien e-acrylic acid copolymer | 2300 | 10.00% | 40.00% | 4000 | 12 | OK | OK | 64 |
| Example 19 | Vinylidene fluoride-butadien e-acrylic acid copolymer | 2300 | 10.00% | 45.00% | 4300 | 13 | OK | NG | 68 |
| Example 20 | Vinylidene fluoride-acrylic acid copolymer | 2000 | 10.00% | 35.00% | 3100 | 10 | OK | OK | 46 |
| Example 21 | Vinylidene fluoride-butadien e-acrylic acid copolymer prepared by a conventional method | 3200 | 10.00% | 35.00% | 4200 | 15 | OK | NG | 68 |
| Comparativ e Example 1 | Vinylidene fluoride polymer | 3600 | 10.00% | 35.00% | 5500 | 22 | NG | NG | 77 |
| Comparativ e Example 2 | Vinylidene fluoride-butadien e copolymer | 1500 | 10.00% | 35.00% | 2200 | 6 | OK | OK | 28 |
| Comparativ e Example 3 | Vinylidene fluoride-acrylic acid copolymer | 2800 | 10.00% | 35.00% | 4700 | 16 | NG | NG | 72 |
| Comparativ e Example 4 | Vinylidene fluoride-butadien e-acrylic acid copolymer | 3400 | 10.00% | 35.00% | 5100 | 20 | NG | NG | 76 |

**Table 3 Cutting Quality Test of Insulation Coating**

| Serial Number | Mass content of black zirconium dioxide | Cutting speed m/min | CCD Identification | Burr pass rate of 100 batches |
|---|---|---|---|---|
| Example 6 | 1.50% | 80 | Y | 100% |
| Example 22 | 0.10% | 60 | Y | 96% |
| Example 23 | 0.20% | 70 | Y | 96% |
| Example 24 | 3.00% | 80 | Y | 100% |
| Example 25 | 3.50% | 80 | N | 0% |
| Example 26 | 0.00% | 60 | Y | 95% |

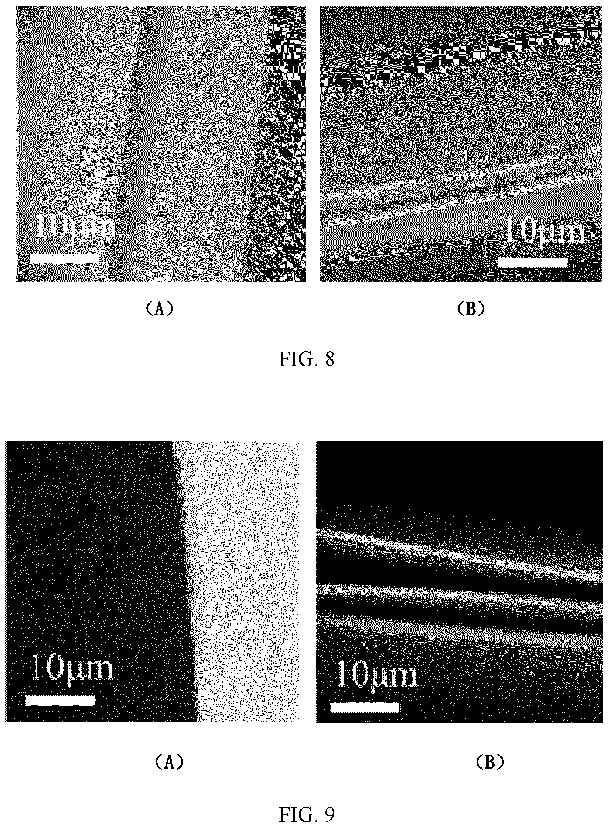

FIG. 8 is a microscopic image of the electrode plate coated with an insulating layer of Example 26 after being laser cut, in which FIG. 8A is a plane photograph of a cut of the electrode plate, and FIG. 8B is a sectional view of a cut of the electrode plate. FIG. 9 is a microscopic image of the electrode plate of Example 6 after being laser cut, in which FIG. 9A is a plane photograph at the cut of the electrode plate, and FIG. 9B is a photograph of a section at the cut of the electrode plate. As can be seen from the comparison between FIG. 8 and FIG. 9, the amount of burrs and the length of burrs of the electrode plate with black zirconium dioxide added in the insulation coating are significantly reduced after being laser cut, effectively improving the laser cutting quality of the electrode plate.

It can be seen from the results in Table 1 that the binders in Examples 1 to 21 each are a fluoropolymer, which includes a structural unit derived from vinylidene fluoride, a structural unit derived from olefin (butadiene or propylene), and a structural unit derived from acrylic acid. The molar content of the structural units derived from vinylidene fluoride in the polymer are in a range of 60% to 80% based on the total mole\ of the structural units in the fluoropolymer. The above fluoropolymer that is used as a binder achieves good effects. Compared with the traditional PVDF binder in Comparative Example 1 and the fluoropolymer with a mass content of 90% derived from vinylidene fluoride structural units in Comparative Example 4, the fluoropolymer of the present disclosure improves both the filterability of the slurry and the flowability of the slurry after standing for 6 h. Compared with the vinylidene fluoride-butadiene copolymer and the vinylidene fluoride-acrylic acid copolymer in Comparative Examples 2 and 3, the fluoropolymer disclosed in the present disclosure can comprehensively improve the flowability, filterability, and adhesive property of the slurry while satisfying the processability and use properties of the slurry.

It can be seen from the comparison between Examples 1 to 3 and 5 to 7 and Example 4 that when the molar content of the structural units derived from acrylic acid in the fluoropolymer is in the range of 5% to 20% based on the total mole of all the structural units in the fluoropolymer, the fluidity of the slurry after standing for 12 h is improved by the fluoropolymer, further widening the process window of the slurry.

As can be seen from the comparison of Examples 2 to 7 with Example 1, when the molar content of the structural units derived from olefin monomers in the fluoropolymer is in the range of 5% to 30% based on the total mole of all structural units in the fluoropolymer, the fluoropolymer enables the slurry to be improved in processability has good adhesion.

It can be seen from the comparison of Examples 8 to 11 that when the weight-average molecular weight of the fluoropolymer is in the range of 500,000 to 800,000, the fluoropolymer disclosed in the present disclosure can comprehensively improve the flowability, filterability, and adhesive property of the slurry while achieving good processability and use properties of the slurry.

It can be seen from Examples 1 to 20 that the viscosity of the glue solution containing 7% (mass content) of a fluoropolymer dissolved in N-methylpyrrolidone is in the range of 2500 mPa·s to 5000 mPa·s. There is no need to add additional dispersants or thickeners to the insulation coating slurry prepared by the fluoropolymer to improve processability, which helps to improve production efficiency and optimize the production process.

It can be seen from the comparison of Example 6 with Example 21 that the fluoropolymer prepared by the method disclosed in the present disclosure is more effective in improving the filterability and flowability of the slurry and improving the processability of the slurry than the fluorine-containing binder synthesized by the conventional method.

From the comparison of Examples 6 and 22 to 25 with Example 26, it can be seen that the addition of black zirconia to the insulation coating helps to reduce burrs on the edges of the electrode plate during the laser cutting, improve the quality of the electrode plate during the laser cutting, and improve the quality of the electrode plate.

It can be seen from the comparison between Examples 6, 23 and 24 and Examples 22 and 25 that when the mass content of black zirconia in the insulation coating is in a range of 0.2% to 3%, the speed of the laser cutting is improved, which helps to further improve the production efficiency and increase the production capacity. Further, the chromatic aberration between the insulation coating and the positive electrode active material layer enables the laser cutting device to be accurately positioned and identified, improving machining accuracy.

It should be noted that the present disclosure is not limited to the above embodiments. The above embodiments are merely examples, and within the scope of the technical solution of the present disclosure, embodiments having substantially the same constitution as the technical idea and exerting the same function and effect are all included within the technical scope of the present disclosure. In addition, various modifications may be made to the embodiments by those skilled in the art without departing from the spirit of the present disclosure, and other embodiments that are constructed by combining some of the constituent elements of the embodiments are also included in the scope of the present disclosure.

## Claims

1. A fluoropolymer, comprising:
a structural unit derived from a monomer of Formula I;
a structural unit derived from an olefin monomer; and
a structural unit derived from a monomer of Formula II,
wherein a molar content of the structural unit derived from the monomer of Formula I is in a range of 60% to 80% based on a total mole of the structural units in the fluoropolymer; and
wherein Formula I and Formula II are as follows: 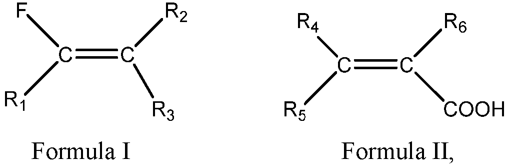
where R₁, R₂ and R₃ each are independently selected from hydrogen, fluorine, chlorine, or C₁₋₃ alkyl containing at least one fluorine atom, and R₄, R₅ and R₆ each are independently selected from hydrogen, or substituted or unsubstituted C₁₋₅ alkyl.

2. The fluoropolymer according to claim 1, wherein R₁ is fluorine, R₂ and R₃ each being independently selected from hydrogen, fluorine, chlorine, or trifluoromethyl, and R₅ and R₆ each being independently selected from hydrogen or methyl.

3. The fluoropolymer according to claim 1 or 2, wherein a mole content of the structural unit derived from the monomer of Formula II is in a range of 5% to 25% based on the total mole of all the structural units in the fluoropolymer.

4. The fluoropolymer according to any one of claims 1 to 3, wherein a molar content of the structural unit derived from the olefin monomer is in a range of 5% to 30% based on the total mole of all the structural units in the fluoropolymer.

5. The fluoropolymer according to any one of claims 1 to 4, wherein the fluoropolymer has a weight-average molecular weight in a range of 500,000 to 800,000.

6. The fluoropolymer according to any one of claims 1 to 5, wherein a glue solution that is prepared by dissolving the fluoropolymer in N-methylpyrrolidone has a viscosity in a range of 1000 mPa·s to 3000 mPa·s, a mass content of the fluoropolymer in the glue solution being 7% based on a total mass of the glue solution.

7. The fluoropolymer according to any one of claims 1 to 6, wherein the monomer of formula I is selected from at least one of a group consisting of vinylidene fluoride, tetrafluoroethylene, chlorotrifluoroethylene, and hexafluoropropylene.

8. The fluoropolymer according to any one of claims 1 to 7, wherein the olefin monomer is selected from at least one of a group consisting of propylene, 2-butene, and butadiene.

9. The fluoropolymer according to any one of claims 1 to 8, wherein the monomer of Formula II is selected from at least one of a group consisting of acrylic acid and methacrylic acid.

10. A preparation method of a fluoropolymer, comprising:
subjecting at least one monomer of Formula I, at least one olefin monomer, and at least one monomer of Formula II to polymerization reaction under polymerizable conditions to prepare the fluoropolymer,
wherein a molar content of the monomer of Formula I is in a range of 60% to 80% based on a total mole of the monomer of Formula I, the olefin monomer, and the monomer of Formula II, Formula I and Formula II being as follows: 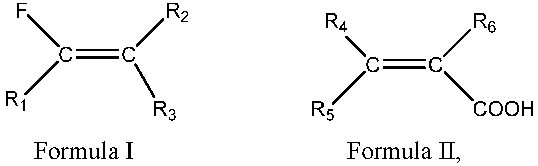
where R₁, R₂ and R₃ each are independently selected from hydrogen, fluorine, chlorine, or C₁₋₃ alkyl containing at least one fluorine atom, and R₄, R₅ and R₆ each are independently selected from hydrogen, or substituted or unsubstituted C₁₋₅ alkyl.

11. The preparation method according to claim 10, wherein R₁ is fluorine, R₂ and R₃ each being independently selected from at least one of a group consisting of hydrogen, fluorine, chlorine, and trifluoromethyl, and R₅ and R₆ each being independently selected from at least one of a group consisting of hydrogen and methyl.

12. The preparation method according to claim 10 or 11, wherein the polymerization reaction comprises first-stage polymerization and second-stage polymerization,
during the first-stage polymerization, providing a first initiator, an emulsifier, the at least one monomer of Formula I and a solvent for the first-stage polymerization, continuously supplying the monomer of Formula I to maintain an initial reaction pressure; and
during the second-stage polymerization, supplying the olefin monomer and the monomer of Formula II into a reaction vessel for the second-stage polymerization after a period of reaction, stopping the reaction when a pressure in the reaction vessel is reduced to be equal to or smaller than 0.5 MPa, performing solid-liquid separation, and retaining a solid phase.

13. The preparation method according to claim 12, wherein the first-stage polymerization has the initial reaction pressure in a range of 5.5 MPa to 7.5 MPa and a reaction temperature in a range of 70°C to 90°C.

14. The preparation method according to claim 12 or 13, wherein the second-stage polymerization comprises:
when a mass of the supplied monomer of Formula I is in a range of 70% to 85% of a total mass of the monomer of Formula I supplied during the polymerization reaction, supplying a mixed gas of the monomer of Formula I and the at least one olefin monomer into the reaction vessel, and maintaining the initial reaction pressure to continuously perform the reaction; and
after all the monomer of Formula I have been supplied into the reaction vessel, supplying a mixture of the olefin monomer and the monomer of Formula II into the reaction vessel.

15. The preparation method according to any one of claims 10 to 14, wherein a ratio of a total moles of the olefin monomer supplied during the polymerization reaction to the total mole of the monomer of Formula I is in a range of 1: 16 to 1: 2.

16. The preparation method according to any one of claims 10 to 15, wherein a ratio of a total mole of the monomer of Formula II supplied during the polymerization reaction to the total mole of the monomer of Formula I is in a range of 1: 16 to 1: 3.

17. The preparation method according to claim 14, wherein a molar ratio of the olefin monomer to the monomer of Formula I in the mixed gas is in a range of 1: 1 to 2: 1.

18. The preparation method according to claim 14 or 17, wherein a molar ratio of the olefin monomer to the monomer of Formula II in the mixture is in a range of 3: 1 to 4: 1.

19. The preparation method according to claim 14 or 18, wherein the second-stage polymerization further comprises:
before supplying the mixed gas of the monomer of Formula I and the olefin monomer into the reaction vessel, adding the first initiator and a second initiator to the reaction vessel.

20. The preparation method according to claim 14 or 19, wherein the second-stage polymerization further comprises:
before supplying the mixture of the olefin monomer and the monomer of Formula II into the reaction vessel, adding a second initiator to the reaction vessel.

21. The preparation method according to claim 19, wherein the first initiator is persulfate.

22. The preparation method according to claim 21, wherein the persulfate is selected from at least one of a group consisting of potassium persulfate and ammonium persulfate.

23. The preparation method according to claim 19 or 20, wherein the second initiator is thiosulfate.

24. The preparation method according to claim 23, wherein the thiosulfate is selected from sodium thiosulfate.

25. Use of the fluoropolymer according to any one of claims 1 to 9 in a secondary battery.

26. An insulation coating, comprising a binder and an inorganic insulating material, wherein the binder is the fluoropolymer according to any one of claims 1 to 9.

27. The insulation coating according to claim 26, wherein a mass content of the binder is in a range of 7.0% to 13.0% based on a total mass of the insulation coating.

28. The insulation coating according to claim 26 or 27, wherein the inorganic insulating material comprises a colored oxide, the colored oxide being selected from at least one of a group consisting of black zirconium dioxide, yellow zirconium dioxide, red zirconium dioxide, and green zirconium dioxide.

29. The insulation coating according to any one of claims 26 to 28, wherein a mass content of the colored oxide is in a range of 0.2% to 3% based on a total mass of the insulation coating.

30. A preparation method of an insulation coating, comprising:
preparing a glue solution by dispersing a binder in a solvent, the binder being the fluoropolymer according to any one of claims 1 to 9;
preparing a slurry by mixing an inorganic insulating material with the glue solution and stirring the inorganic insulating material and the glue solution, a solid content of the slurry being in a range of 30% to 40%; and
applying the slurry to a current collector to prepare the insulation coating.

31. The preparation method according to claim 30, wherein the slurry has a viscosity in a range of 2500 mPa·s to 4000 mPa·s at the solid content in the range of 30% to 40%.

32. The preparation method according to claim 30 or 31, wherein the mixing the inorganic insulating material with the glue solution comprises:
mixing a part of the inorganic insulating material excluding a colored oxide with the glue solution to obtain a mixture, stirring the mixture, adding the colored oxide to the stirred mixture, and stirring again to prepare the slurry.

33. A secondary battery, comprising a positive electrode plate, a separator, a negative electrode plate, and an electrolyte, wherein the positive electrode plate and/or the negative electrode plate comprise the insulation coating according to any one of claims 26 to 29.

34. The secondary battery according to claim 33, wherein the secondary battery comprises at least one of a lithium ion battery, a sodium ion battery, a magnesium ion battery, or a potassium ion battery.

35. A battery module, comprising the secondary battery according to claim 33 or 34.

36. A battery pack, comprising at least one of the secondary battery according to claim 33 or 34, or the battery module according to claim 35.

37. A powered device, comprising at least one of the secondary battery according to claim 33 or 34, the battery module according to claim 35, or the battery pack according to claim 36.
